Europäisches Patentamt

European Patent Office

Office européen des brevets

(11) Publication number: **0 343 747**
**A2**

# EUROPEAN PATENT APPLICATION

(21) Application number: 89201316.0

(22) Date of filing: 23.05.89

(51) Int. Cl.⁴: **C08K 5/04 , C08L 67/06 ,
//(C08K5/04,5:10,5:14),
(C08K5/04,5:11,5:14)**

(30) Priority: 26.05.88 JP 126997/88

(43) Date of publication of application:
**29.11.89 Bulletin 89/48**

(84) Designated Contracting States:
**DE ES FR GB IT NL SE**

(71) Applicant: **KAYAKU NOURY CORPORATION
1-11-2 1-chome Fujimi Chiyoda-ku
Tokyo(JP)**

(72) Inventor: **Ishiwatari, Akio
Kushiyama Nishi 1191-1
Onoda City Yamaguchi Prefecture(JP)**

(74) Representative: **Sieders, René et al
AKZO N.V. Patent Department (Dept. CO)
P.O. Box 9300
NL-6800 SB Arnhem(NL)**

(54) Benzoyl and ketone peroxide compositions.

(57) A peroxide composition including a benzoyl peroxide and a ketone peroxide diluted with an aliphatic dibasic acid ester and/or an aliphatic monobasic acid ester is disclosed. The composition is storage stable and may be used as a curing agent for polyester putty. The diluent for the ketone peroxide is a diluent in which benzoyl peroxide is, at most, sparingly soluble.

EP 0 343 747 A2

# A Benzoyl and Ketone Peroxide Composition

The present invention relates to a peroxide composition useful as a curing agent for a polyester putty or fiber-reinforced plastics (FRP).

A polyester putty or FRP contains an unsaturated polyester resin (hereinafter abbreviated to "UP resin") as a major component, so that the curing rate of the unsaturated polyester resin has a significant influence upon the workability in molding of the putty or FRP. Therefore, the selection of a curing agent is important for the molding of a polyester putty or FRP.

In order to cure a UP resin at room temperature, it is necessary to use an accelerator together with a curing agent (organic peroxide). Although many combinations of curing agents with accelerators have been proposed, they are broadly classified into the following two groups. The curing agent systems according to the prior art have both advantages and disadvantages.

One of the two groups includes systems comprising a benzoyl peroxide (hereinafter abbreviated to "BPO") such as benzoyl peroxide, o-methylbenzoyl peroxide or m-methylbenzoyl peroxide as a curing agent and a tertiary amine such as dimethylaniline or dimethyl-p-toluidine as an accelerator. These systems have advantages in that the kick-off of the curing is speedy, that the curing rate at low temperature is relatively high and that they are generally not adversely affected by moisture. However, they have also disadvantages in that the surface dryness of the cured product is poor and that the amount of the styrene monomer remaining in the cured product is large.

The other of the groups includes systems comprising a ketone peroxide (hereinafter abbreviated to "KPO") such as methyl ethyl ketone peroxide, methyl isobutyl ketone peroxide or cyclohexanone peroxide as a curing agent and a metallic soap such as cobalt naphthenate or manganese naphthenate as an accelerator. These systems have advantages in that the surface dryness of the cured product is excellent and that the amount of the residual styrene monomer is small. However, they have also disadvantages in that they are adversely affected by moisture and that the curing rate at low temperature is relatively slow.

For the purpose of utilizing the advantages of these two kinds of curing agent systems to offset the disadvantages thereof, the simultaneous use of both the kinds of curing agent systems has been attempted. That is, it has been attempted to use both BOP and KOP as curing agents and both a tertiary amine and a metallic soap as accelerators. Although this attempt gave the expected results, it has not been put to practical use as yet, because the addition of two kinds of curing agents to a polyester putty or a UP resin is troublesome.

In this system, an accelerator such as a tertiary amine or a metallic soap may be preliminarily added to a polyester putty or a UP resin, so that the addition is not necessary during the molding operation, even if many kinds of accelerators are added. However, the curing agent must be added just before the molding of the polyester putty of FRP because of the limited pot life of a mixture. Thereof, when two curing agents are used, they must be separately added in two installments which results in a complicated molding operation. Further the use of two curing agents creates the possibility that the addition of one of the curing agents might be forgotten or that the addition of one of the them might be repeated twice. Thus, as yet, the combination of the above two kinds of curing agent systems has not been put to practical use.

For the purpose of simplifying the addition of curing agents and reducing the problems as described above, it has been attempted to prepare compositions of various combinations of BPO and KPO. However, when a composition prepared only by mixing a commercially available BPO with a commercially available KPO is stored at room temperature, it exhibits a more significant reduction in the active principle content (shown by the amount of active oxygen) and generates a larger amount of gas by peroxide decomposition than with either the BPO or the KPO alone.

In order to solve these problems, it has been proposed to use an alcohol together with a commercially available BPO and a commercially available KPO (see Japanese Patent Laid-Open No. 40507/1982). However, this method is disadvantageous because the alcohol used exerts a bad influence upon the physical properties and surface dryness of the resulting polyester putty or FRP.

Further, a process of using a commercially available BPO together with a KPO which is solid (crystalline) at ordinary temperatures has been proposed (see Japanese Patent Laid-Open No. 281140/1986). This process gives a composition comprising BPO and KPO which is free from the bad influence due to an alcohol and is improved as compared with the composition according to the above-mentioned Japanese Patent Laid-Open No. 40507/1982. However, the composition has disadvantages in that the crystalline KPO causes agglomeration or blocking during its storage. Further, even when a paste is prepared by adding a plasticizer such as dimethyl phthalate (DMP), the resulting composition has also the disadvantage in that the KPO crystals grow during its long-term storage at ordinary temperatures.

A wide variety of esters are known to be useful as desensitizing agents for ketone peroxides. These desensitizing agents make the ketone peroxide less likely to explosively decompose therely allowing the handling and transport of such peroxides. For example, non-hazardous ketone peroxide compositions are disclosed in British Patent 1,256,432 (Argus Chemical). These compositions may include one of several esters boiling at or above 199°C as a desensitizing agent for ketone peroxide.

In U.S. Patent 3,649,546 (Mc Closky et al.) several esters suitable for desensitizing ketone peroxide are disclosed. The esters disclosed as effective for this purpose are esters wherein the sum of carbon and oxygen atoms is from 9 to 16 and which boil in the boiling range of 140°C to 250°C. Further esters useful as desensitizing agents for ketone peroxides are also set out in U.S. patent 4,628,817 (Meijer) and published European Patent Application 0 084 689 (Akzo N.V.). However, none of these publications teaches or suggests that esters may be used to prepare storage stable mixed peroxides as in the present invention.

Finally, Japanese patent applications J5 4 055 510 and J5 3 046 910 (Nippon Oils & Fats) each disclosure ketone peroxide compositions diluted with esters which are useful as hardening agents for unsaturated polyesters. Neither of the disclosed compositions contain benzoyl peroxide.

The present invention reduces the decrease in the active oxygen content in a composition containing a KPO and a BPO, the amount of the gas generated by the decomposition of the composition and avoids problems associated with the deformation (such as agglomeration or blocking) of the KPO. It has also been found that the storage stability of such a composition remarkably varies depending upon the kind of the plasticizer used for the KPO.

For safety reasons, KPO such as methyl ethyl ketone peroxide (hereinafter abbreviated to "MEKP"), methyl isobutyl ketone peroxide (hereinafter abbreviated to "MIBKP"), cyclohexanone peroxide (hereinafter abbreviated to "CYHP") or methylcyclohexanone peroxide (hereinafter abbreviated to "MCYHP") is put on the market in a state diluted with a plasticizer such as dimethyl phthalate (DMP), dibutyl phthalate (DBP) or triethyl phosphate (TEP) so as to give an active principle content of about 45 to 50%.

The present invention relates to a peroxide composition containing both a benzoyl peroxide and a ketone peroxide, characterized in that said ketone peroxide is one prepared by using a plasticizer in which BPO is insoluble or sparingly soluble, instead of phthalate plasticizers such a dimethyl phthalate (DMP) or dibutyl phthalate (DBP) or phosphate plasticizers such as triethyl phosphate (TEP) according to the prior art, in which BPO is soluble.

The plasticizers in which BPO is insoluble or sparingly soluble to be used in the present invention include aliphatic dibasic acid esters such as diisodecyl succinate (DIDSu), diisodecyl adipate (DIDA), dioctyl azelate (DOZ) and dibutyl sebacate (DBS) and aliphatic monobasic acid esters such as butyl oleate (BO) and methyl acetylricinoleate (MAR). These di- and mono-basic acid esters may be used, as a diluent for KPO, either alone or as a mixture obtained by mixing one of the aliphatic dibasic acid esters with one of the aliphatic monobasic esters in any ratio.

In any case, the object of the present invention, i.e., the improvement in the stability of a composition containing both a KPO and a BPO is attained. The aliphatic dibasic acid esters, aliphatic monobasic acid esters or mixtures of both can be used in the preparation of a liquid ketone peroxide such as methyl ethyl ketone peroxide (MEKP), methyl isobutyl ketone peroxide (MIBKP), cyclohexanone peroxide (CYHP) or methylcyclohexanone peroxide (MCYHP).

The composition prepared by mixing a liquid KPO prepared by use of the diluent according to the present invention with a BPO is stable. Thus, according to the present invention, a stable composition containing both a KPO and a BPO has been obtained for the first time without employing alcohol thereby avoiding the adverse effects associated therewith.

The BPO to be mixed with the liquid KPO includes benzoyl peroxide itself and benzoyl peroxides substituted on the nucleus such as o-methylbenzoyl peroxide, m-methylbenzoyl peroxide, o-chlorobenzoyl peroxide, p-chlorobenzoyl peroxide and 2,4-dichlorobenzoyl peroxide. The BPO to be mixed may be either industrially pure, may be diluted with an aliphatic dibasic acid ester or an aliphatic monobasic acid ester or wetted with water.

Although the weight ratio of BPO to KPO to be employed may be arbitrarily selected, it is preferred from the standpoint of curing characteristics that it lies between 10:90 and 90 : 10. The obtained composition containing both a BPO and a KPO may be in a form wherein the BPO separates out to settle at the bottom of the composition, or a powdery form wherein the amount of the liquid component added is too small. When the composition is such that there is separation or settling of BPO, the composition can be homogenized by adding a thixotropic agent such as Aerosil to it to thereby convert it into a paste. When the composition is powdery, the composition can homogenized by adding an aliphatic dibasic acid ester, an aliphatic monobasic acid ester or a mixture of both thereto to thereby convert it into a paste. Accordingly, the amount of plasticizer employed will vary depending on the ketone and benzoyl peroxides used as well as the relative amounts of the ketone and benzoyl peroxides. Preferably, sufficient plasticizer is employed to ensure that the composition is in the form of a paste. When two or more KPOs or BPOs are used, a stable composition can be also obtained.

The minimum amount of plasticizer which may be used is an amount sufficient to effectively dilute the ketone peroxide. Thus, the optimal amount of plasticizer to be employed will depend to some extent on the amount of ketone peroxide. The amount of plasticizer employed in the composition may be from about 10 wt.% to about 55 wt.%. Generally use of less than 10% will not be possible since the ketone peroxide will not be effectively diluted by the plasticizer. Amounts over 55% are possible but lead to extremely long cure times which are highly undesirable. A more preferred amount of plasticizer is from about 15 to about 40 wt.% of the composition.

If necessary, the peroxide composition of the present invention may be colored.

The present invention will now be described by referring to the following Comparative Examples and Examples.

Comparative Examples 1 to 10

The peroxides given in Table 1 were placed in a 500-ml beaker each in an amount of 100 g and stirred with a glass rod to obtain a homogeneous mixture. This homogeneous mixture was fed into two polyethylene tubes having a capacity of 130 cc in an amount 100 g per tube. The air present in the tubes was pressed out and the tubes were sealed.

The tubes thus treated were allowed to stand in an oven at $40^\circ$C for one day to determine the content of active oxygen (abbreviated to "A.O.") in the mixture and the amount of the generated gas.

The amount of active oxygen was determined by iodometry and the amount of the generated gas is shown by bulge (average at n = 2) per 100 g of the mixture (see Table 1).

The benzoyl peroxide, o-methylbenzoyl peroxide, m-methylbenzoyl peroxide, o-chlorobenzoyl peroxide, p-chlorobenzoyl peroxide and 2,4-dichlorobenzoyl peroxide used are all industrially pure ones each having a purity of 98%.

The liquid KPO used are all commercially available ones (products of Kayaku Noury Corporation).

| MEKP : Kayamek M | (A.O.: 10.21%) |
| MIBKP : Kayamek B | (A.O.: 10.15%) |
| CYHP : Cyclonox | (A.O.: 8.11%) |
| MCYHP : Trigonox 38 | (A.O.: 6.05%) |

These commercially available liquid KPO each exhibit a relative lowering in the active oxygen content of 4 or below and a bulge of 2 cc/100 g or below.

4

Table 1   Storage stability of composition containing BPO and liquid KPO

| | | Comp. Ex. 1 | Comp. Ex. 2 | Comp. Ex. 3 | Comp. Ex. 4 |
|---|---|---|---|---|---|
| Formulation | BPO | BPO | BPO | BPO | BPO |
| | liquid KPO | MEKP | MIBKP | CYHP | MCYHP |
| Stability | A.O. just after the blending | 8.34% | 8.31 | 7.32 | 6.25 |
| | A.O. after one day at 40°C | 6.63% | 6.18 | 5.61 | 4.42 |
| | relative lowering | 20.5 % | 25.6 | 23.4 | 29.3 |
| | bulge after one day at 40°C | 30 cc or above | 30 cc or above | 30 cc or above | 30 cc or above |

| | | Comp. Ex. 5 | Comp. Ex. 6 | Comp. Ex. 7 | Comp. Ex. 8 | Comp. Ex. 9 | Comp. Ex. 10 |
|---|---|---|---|---|---|---|---|
| Formulation | BPO | o-methyl BPO | m-methyl BPO | o-chloro BPO | p-chloro BPO | 2,4-dichloro BPO | m-methyl BPO |
| | liquid KPO | MEKP | MEKP | MEKP | MEKP | MEKP | CYHP |
| Stability | A.O. just after the blending | 8.07 | 8.05 | 7.63 | 7.64 | 7.15 | 6.95 |
| | A.O. after one day at 40°C | 5.45 | 5.53 | 4.94 | 5.33 | 4.49 | 4.98 |
| | relative lowering | 32.5 | 31.3 | 35.3 | 30.2 | 37.2 | 28.3 |
| | bulge after one day at 40°C | 30 cc or above | 30 cc or above | 30 cc or above | 30 cc or above | 30 cc or above | 30 cc or above |

Relative lowering = (A.O. just after blending - A.O. after one day at 40°C) ÷ A.O. just after blending x 100

Examples 1 to 15

The BPO and KPO given in Table 2 were placed in a 500-ml beaker each in an amount of 110 g and mixed sufficiently to obtain a mixture. This mixture was fed into two polyethylene tubes each having a capacity of 130 cc in an amount of 100 g per tube. The air present in the tubes was pressed out and the tubes were sealed.

The resulting tubes were placed in an oven of 40°C for two weeks to determine the content of active oxygen (A.O.) in the mixture and the amount of the generated gas. The content of active oxygen was determine by iodometry and the amount of the generated gas is shown by bulge (average at n = 2) per 100 g of the mixture (see Table 2).

The BPO and KPO used are as follows:

(1) BPO

| BPO | <6.61%> |
|---|---|
| o-methyl BPO | <5.92%> |
| m-methyl BPO | <5.92%> |
| o-chloro BPO | <5.14%> |
| p-chloro BPO | <5.14%> |
| 2,4-dichloro BPO | <4.21%> |

The BPO used are all industrially pure ones. The active oxygen contents thereof are show in < >.

(2) KPO

| MEKP (DIDSu) | <10.20%> |
|---|---|
| MEKP (DINA) | <10.22%> |
| MEKP (DIDA) | <10.25%> |
| MEKP (DOZ) | <10.31%> |
| MEKP (DBS) | <10.19%> |
| MEKP (BO) | <10.18%> |
| MEKP (MAR) | <10.26%> |
| CYHP (DIDA) | <8.40%> |
| MCYHP (DIDA) | <6.08%> |
| MIBKP (DIDA) | <10.22%> |

The plasticizer used for each KPO is shown in ( ). In each of these examples 25 wt.% of the plasticizer was employed.

After the storage for 30 days at 40°C, these KPO each exhibit a relative lowering in its active oxygen content of 4% or below and a bulge of 2 cc/100 g or below. The active oxygen content of each KPO is shown in < >.

Table 2    Storage stability of pasty composition containing both BPO and KPO

| | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|
| Formulation | BPO | BPO | BPO | BPO | BPO | BPO | BPO | BPO | BPO | BPO | BPO |
| | KPO | MEKP (DIDSU) | MEKP (DINA) | MEKP (DIDA) | MEKP (DOZ) | MEKP (DBS) | MEKP (BO) | MEKP (MAR) | CYHP (DIDA) | MCYHP (DIDA) | MIBKP (DIDA) |
| Stability | A.O. just after blending | 8.40 % | 8.42 | 8.43 | 8.46 | 8.40 | 8.40 | 8.44 | 7.51 | 6.35 | 8.42 |
| | A.O. after 14 days at 40°C | 8.22 % | 8.24 | 8.27 | 8.27 | 8.20 | 8.19 | 8.28 | 7.26 | 6.17 | 8.19 |
| | relative lowering | 2.1 % | 2.1 | 1.9 | 2.2 | 2.4 | 2.5 | 1.9 | 3.3 | 2.8 | 2.7 |
| | bulge after 14 days at 40°C | 1 cc | 1 | 0 | 0 | 2 | 1 | 1 | 0 | 0 | 0 |

| | | Ex. 11 | Ex. 12 | Ex. 13 | Ex. 14 | Ex. 15 |
|---|---|---|---|---|---|---|
| Formulation | BPO | o-methyl BPO | m-methyl BPO | o-chloro BPO | p-chloro BPO | 2,4-di-chloro BPO |
| | KPO | MEKP (DIDA) | MEKP (DIDA) | MEKP (DIDA) | MEKP (DIDA) | MEKP (DIDA) |
| Stability | A.O. just after blending | 8.09 % | 8.08 | 7.70 | 7.69 | 7.23 |
| | A.O. after 14 days at 40°C | 7.84 % | 7.85 | 7.49 | 7.47 | 7.04 |
| | relative lowering | 3.1 % | 2.8 | 2.7 | 2.9 | 2.6 |
| | bulge after 14 days at 40°C | 2 cc | 1 | 0 | 0 | 0 |

In Examples 1 to 15, the ratio of BPO to KPO is 1 : 1.

Examples 16 to 24

A mixture comprising BPO and KPO (prepared by using a mixture of two plasticizers (1:1) as a diluent) was stored at 40°C for two weeks in a similar manner to the one described in the Examples to determine the active oxygen content (A.O.) and the amount of the generated gas.

The measurment methods are each the same as that described in the Examples 1-15. The results are shown in Table 3.

The KPO used are as follows:

| | |
|---|---|
| MEKP (DIDA/DOZ = 1:1) | <10.15%> |
| MEKP (DIDSu/BO = 1:1) | <10.20%> |
| CYHP (DIDA/DOZ = 1:1) | <8.10%> |
| CYHP (DIDSu/BO = 1:1) | <8.12%> |
| MIBKP (DIDA/DOZ = 1:1) | <10.12%> |
| MIBKP (DIDSu/BO = 1:1) | <10.11%> |
| MCYHP (DIDA/DOZ = 1:1) | <6.03%> |
| MCYHP (DIDSu/BO = 1:1) | <6.03%> |

In Example 24, a mixture comprising MEKP (DIDA/DOZ = 1:1) and CYHP (DIDSu/BO = 1:1) with a ratio of 1:1 was used. In all of examples 16-24, 25 wt.% of plasticizer was employed.

8

Table 3 Storage stability of pasty composition containing BPO and KPO

| | | Ex. 16 | Ex. 17 | Ex. 18 | Ex. 19 | Ex. 20 | Ex. 21 |
|---|---|---|---|---|---|---|---|
| Formu-lation | BPO | BPO | BPO | BPO | BPO | BPO | BPO |
| | KPO | MEKP (DILN/IXP) | MEKP (DILSI/IIO) | CYIIP (DILN/DOZ) | CYIIP (DILSI/IIO) | MIBKP (DILN/IOZ) | MIBKP (DILSI/IIO) |
| Stabi-lity | A.O. just after blending | 8.38 % | 8.41 | 7.36 | 7.37 | 8.37 | 8.36 |
| | A.O. after 14 days at 40°C | 8.21 % | 8.22 | 7.10 | 7.12 | 8.13 | 8.12 |
| | relative lowering | 2.0 % | 2.3 | 3.5 | 3.4 | 2.9 | 2.9 |
| | bulge after 14 days at 40°C | 0 cc | 1 | 0 | 0 | 0 | 0 |

| | | Ex. 22 | Ex. 23 | Ex. 24 |
|---|---|---|---|---|
| Formu-lation | BPO | BPO | BPO | BPO |
| | KPO | MCYIIP (DILN/DOZ) | MCYIIP (DILSI/IIO) | MEKP+CYIIP (DILN/DOZ)(DILSI/IIO) |
| Stabi-lity | A.O. just after blending | 6.32 | 6.32 | 7.87 |
| | A.O. after 14 days at 40°C | 6.15 | 6.13 | 7.59 |
| | relative lowering | 2.7 | 3.0 | 3.6 |
| | bulge after 14 days at 40°C | 1 | 1 | 2 |

The ratio of two diluents used for KPO in each of Examples 16 to 24 is 1 : 1.

In Example 24, the ratio of the one of the two KPO to the other thereof is 1 : 1.

Examples 25 and 26

Aerosil and a pigment were added to the peroxide composition of Example 3 to obtain a mixture. This mixture was examined for storage stability. The measurement method used is the same as that described in the above-mentioned Examples.

The results are shown in Table 5. Aerosil was added in an amount of 2% and carbon black as a black pigment was added in an amount of 1%.

Table 5

| Storage stability of pasty peroxide composition containing Aerosil and pigment | | |
|---|---|---|
| | Example 25 Aerosil 300 | Example 26 Black pigment |
| A.O. just after blending | 8.26% | 8.35% |
| A.O. just after 14 days at 40°C | 8.08% | 8.14% |
| Relative lowering | 2.2% | 2.5% |
| Bulge after 14 days at 40°C | 2cc | 2cc |

Application Examples

The pastes of Examples 2, 8 and 13 were each applied to a commercially available polyester putty to determine the dryness of the putty. Two kinds of polyester putties, i.e., ones for sheet metal characterized by being cured with BPO and polyputties characterized by being cured with cyclohexanone peroxide are put on the market.

For comparing the performances of pastes containing both BPO and KPO, a mixture comprising a sheet metal putty and a polyputty with a ratio of 1:1 was mainly used. The amount of the curing agent added was 2 parts in any case, and the measurement was carried out at 20°C.

The results are shown in Table 6.

Gelation time :

50 g of a putty was placed in a polyethylene cup, followed by the addition of 1 g of a curing agent. The contents were well mixed for one minute to determine the time which had elapsed from the beginning of the mixing until the gelation.

Tack-free time:

50 g of a putty was placed in a polyethylene cup, followed by the addition of 1 g of a curing agent. The contents were well mixed for one minute and applied to an iron sheet in a thickness of 2 mm to determine the time which had elapsed until the putty surface became tack-free from the beginning of the mixing.

Abrasion enabling time:

After the above determination of the tack-free time, the coating was examined for the time which had elapsed from the beginning of the mixing until it became adradable with a paper of#280.

Table 6

| Comparison of curing characteristics of polyester putty | | | | | |
|---|---|---|---|---|---|
| | Curing system | | Curing characteristics | | |
| | kind of putty | kind of curing agent | gelation time | tack-free time | abrasion enabling time |
| Application Example 1 | polyputty | one for polyputty | 3 min 10 sec | 11 min 40 sec | 34 min |
| 2 | sheet metal putty | one for sheet metal putty | 5' 25" | 21' 00" | 39' |
| 3 | polyputty | conventional curing agent mixture | 4' 20" | 10' 20" | 29' |
| 4 | polyputty | Example 2 | 3' 22" | 7' 15" | 17' |
| 5 | polyputty | Example 8 | 3' 10" | 7' 00" | 17' |
| 6 | polyputty | Example 13 | 3' 30" | 7' 20" | 18' |
| 7 | sheet metal putty | conventional curing agent mixture | 4' 20" | 19' 30" | 35' |
| 8 | sheet metal putty | Example 2 | 4' 10" | 14' 00" | 22' |
| 9 | sheet metal putty | Example 8 | 4' 09" | 14' 00" | 22' |
| 10 | sheet metal putty | Example 13 | 4' 07" | 13' 55" | 22' |
| 11 | polyputty + sheet metal putty | conventional curing agent mixture | 4' 30" | 10' 40" | 28' |
| 12 | polyputty + sheet metal putty | Example 2 | 3' 40" | 7' 55" | 15' |
| 13 | polyputty + sheet metal putty | Example 8 | 3' 35" | 7' 45" | 15' |
| 14 | polyputty + sheet metal putty | Example 13 | 3' 40" | 8' 00" | 16' |
| The curing agents used in Application Examples 1 and 2 are commercially available ones (057-0015 and 057-0022, both are products of Rock Paint) | | | | | |
| The conventional curing agent mixture used above is one described in Japanese Patent Laid-Open No. 40507/1982, Example 86 (CYPO : 60, BPO : 20, glycerin : 20) and was used in an amount of 2 parts which is equal to those of the other Applicat on Examples. | | | | | |
| The polyputty used above is a commercially available one (057-0115, a product of Rock Paint), while the sheet metal putty used above is a commercially available one (057-0222, a product of Rock Paint). | | | | | |

A polyester putty or FRP can be cured at a relatively high rate even at a low temperature by using the peroxide composition of the present invention to give a cured product excellent in surface dryness.

Claims

1. A storage stable mixed peroxide composition characterized in that the composition contains a ketone peroxide, a benzoyl peroxide and an effective amount of a plasiticizer for the ketone peroxide in which the benzoyl peroxide is at most, sparingly soluble.

2. A peroxide composition in accordance with claim 1, characterized in that said plasticizer is selected from an aliphatic dibasic acid ester, an aliphatic monobasic acid ester or a mixture of one aliphatic monobasic acid ester and one aliphatic dibasic acid ester.

3. A peroxide composition in accordance with claim 1 or 2 wherein said plasticizer is selected from the aliphatic dibasic acid esters diisodecyl succinate, diisodecyl adipate, dioctyl azelate, dibutyl sebacate, the aliphatic monobasic acid esters butyl oleate and methyl acetylricinoleate, or a mixture of one of the aliphatic monobasic acid esters and one of the aliphatic dibasic acid esters.

4. A composition according to claim 1, 2 or 3 wherein said plasticizer comprises from 10 to 55 wt.% of said composition.

5. A composition according to claim 1, 2, 3 or 4 wherein the ratio of said benzoyl peroxide to said ketone peroxide is from 10:90 to 90:10.

6. A composition according to claim 1, 2, 3, 4 or 5 wherein said benzoyl peroxide is selected from benzoyl peroxide, o-methylbenzoyl peroxide, m-methylbenzoyl peroxide, o-chlorobenzoyl peroxide, p-chlorobenzoyl peroxide and 2,4-dichlorobenzoyl peroxide, and said ketone peroxide is selected from methyl ethyl ketone peroxide, methyl isobutyl ketone peroxide, cyclohexanone peroxide and methylcyclohexanone peroxide.

7. A process for curing an unsaturated polyester resin in which process an unsaturated polyester resin is contacted with an effective amount of a peroxide-containing curing composition characterized in that said peroxide-containing curing composition is a composition in accordance with any one of claims 1, 2, 3, 4, 5 or 6.

8. A process for curing an unsaturated polyester resin in accordance with claim 7 wherein said polyester resin is a polyester putty.

9. A cured polyester putty made by the process of claim 7 or 8.